# EUROPEAN PATENT APPLICATION

(11) **EP 4 546 599 A1**
(43) Date of publication of application: **30.04.2025**
(21) Application number: 23851379.0
(22) Date of filing: 19.06.2023
(51) Int. Cl.: H02J 7/00, A24F 40/90

(54) **ELECTRONIC ATOMIZATION SYSTEM AND CHARGING DEVICE**

(30) Priority: 10.08.2022 CN 202210956754
(71) Applicant: Shenzhen Merit Technology Co., Ltd., Shenzhen, Guangdong 518105 (CN)
(72) Inventor: YUAN, Yongbao, Shenzhen, Guangdong 518105 (CN); LIAO, Yancheng, Shenzhen, Guangdong 518105 (CN)
(74) Representative: Westphal, Mussgnug & Partner, Patentanwälte mbB
(86) International application number: PCT/CN2023/101045
(87) International publication number: WO 2024/032152

(57) **Abstract**

The present invention relates to an electronic atomization system and a charging device. The charging device comprises a charging seat and a rotating cover. An accommodating cavity is formed in the charging seat and is configured for accommodating the electronic atomization device. The rotating cover is rotatably arranged on the charging seat and can cover the accommodating cavity. When the rotating cover rotates to a first position, the accommodating cavity is opened; and when the rotating cover rotates to a second position, the accommodating cavity is closed. In the charging device, a rotatable rotating cover is arranged on the charging seat. When the rotating cover rotates to the first position, the accommodating cavity is opened, such that the electronic atomization device can be put into the accommodating cavity or be taken out from the accommodating cavity. When the rotating cover rotates to the second position, the accommodating cavity is closed, such that the electronic atomization device being charged can be protected. The charging device has the advantages of a simple structure, a low manufacturing cost, and a high safety performance.

## Description

### TECHNICAL FIELD

The present invention the field of atomization, and more particularly to an electronic atomization system and a charging device.

### THE RELATED ART

Charging devices that are used for charging electronic atomization devices in the related art usually do not provide protection to the electronic atomization device being charged, and have complex structures, a number of forming steps processes, and high costs.

### SUMMARY OF THE INVENTION

The technical issue that the present invention aims to solve is to provide an improved charging device, and further provide an electronic atomization system.

The technical solution that the present invention adopts to resolve the technical issue is to provide a charging device which comprises a charging seat and a rotating cover. The charging seat comprises an accommodating cavity for accommodating an electronic atomization device. The rotating cover is rotatably mounted on the charging seat and is operable to cover the accommodating cavity;
when the rotating cover rotates to a first position, the accommodating cavity is opened; and when the rotating cover rotates to a second position, the accommodating cavity is closed.

In some embodiments, when the rotating cover further rotates to a third position, the accommodating cavity is opened; and the second position is set between the first position and the third position.

In some embodiments, the third position and the first position are symmetrically arranged on two opposite sides of the second position.

In some embodiments, the charging seat comprises an opening in communication with the accommodating cavity;
the charging seat comprises a first end and a second end opposite to the first end; the opening extends from the first end toward the second end;
the rotating cover is rotatable to cover the opening.

In some embodiments, the rotating cover comprises a covering portion that covers and closes the opening and a first connecting portion and a second connecting portion arranged at two ends of the covering portion;
the first connecting portion and the second connecting portion are respectively and rotatably connected to the first end and the second end.

In some embodiments, a positioning structure is further included, and the positioning structure is arranged in the charging seat for positioning the rotating cover.

In some embodiments, the positioning structure comprises a positioning seat and a positioning member that is elastic; the positioning seat is at least partly arranged in the charging seat and is connected to the rotating cover to be driven to rotate by rotation of the rotating cover;
the positioning member is arranged in the charging seat and engageable with the positioning seat for positioning.

In some embodiments, the positioning seat comprises a positioning tab that is drivable by the rotating cover to rotate, and the positioning tab comprises a positioning groove engageable with the positioning member;
when the rotating cover rotates to the second position, the positioning member partly fits into the positioning groove.

In some embodiments, the positioning member comprises a column-shaped body and an elastic ball arranged on one end of the column-shaped body;
the positioning groove has an inner surface that is of an arc shape for mating the elastic ball.

In some embodiments, the positioning seat further comprises a first positioning rib that is drivable by the rotating cover to rotate, and a first positioning stop rib is arranged in the charging seat;
when the rotating cover rotates to the first position, the first positioning rib engages with the first positioning stop rib for positioning.

In some embodiments, the positioning seat further comprises a second positioning rib that is drivable by the rotating cover to rotate, and a second positioning stop rib is arranged in the charging seat;
when the rotating cover rotates to the third position, the second positioning rib engages with the second positioning stop rib for positioning and the accommodating cavity is open.

In some embodiments, the first positioning rib and the second positioning rib are arranged symmetric with each other and cooperate with each other to define a maximum angle of rotation of the rotating cover.

In some embodiments, the positioning structure further comprises an elastic element, and the elastic element is arranged in the charging seat and abuts against the positioning member to apply a spring force to the positioning member.

In some embodiments, a rotating structure is further included and is mounted on the charging seat and operates with the rotating cover.

In some embodiments, the rotating structure comprises a rotation axle;
the charging seat comprises a first seat body and a second seat body cooperating with the first seat body, and the rotation axle is mounted between the first seat body and the second seat body and connected to the rotating cover.

In some embodiments, the first seat body is provided with a mounting structure cooperating with the rotation axle for mounting;
the mounting structure comprises a mounting trough, the mounting trough being arranged in an axial direction of the rotation axle to receive the rotation axle to insert therein;
the rotation axle forms a gap with respect to a trough wall of the mounting trough in an axial direction.

In some embodiments, the rotating structure comprises a fixing seat mounted on the charging seat, the fixing seat being connected to the rotating cover, the rotation axle being connected and fixed to the fixing seat.

In some embodiments, a power supply structure is further included and arranged in the charging seat and a charging circuit board is connected to the power supply structure.

In some embodiments, a charging connector is further included, and the charging connector is arranged on a cavity wall of the accommodating cavity.

The present invention also constructs an electronic atomization system, which comprises the charging device of the present invention and an electronic atomization device; the electronic atomization device is receivable in the accommodating cavity of the charging device for charging.

Implementation of the electronic atomization system and the charging device according to the present invention has the following advantageous effects. The charging device includes the rotating cover that is rotatable and mounted on the charging seat, so that when the rotating cover rotates to the first position, the accommodating cavity is opened to allow the electronic atomization device to place into the accommodating cavity or to remove from the accommodating cavity. When the rotating cover rotates to the second position, the accommodating cavity is closed so as to fulfill protection for the electronic atomization device that is being charged. The charging device has the advantages of simple structure, low manufacturing cost, and high safety performance.

### BRIEF DESCRIPTION OF THE DRAWINGS

The present invention will be further described below in conjunction with the accompanying drawings and embodiments. In the drawings:
FIG 1 is a schematic structure diagram showing an electronic atomization system according to some embodiments of the present invention;
FIG 2 is a schematic diagram showing a state that a rotating cover of a charging device of the electronic atomization system shown in FIG 1 being rotated to a first position;
FIG 3 is a cross-sectional diagram showing the state that the rotating cover of the charging device of the electronic atomization system shown in FIG 1 being rotated to the first position;
FIG 4 is an enlarged diagram of a partial structure of the charging device of the electronic atomization system shown in FIG 3;
FIG 5 is a schematic diagram showing a state that the rotating cover of the charging device of the electronic atomization system shown in FIG 1 rotating to a second position;
FIG 6 is a cross-sectional diagram showing the state that the rotating cover of the charging device of the electronic atomization system shown in FIG 1 rotating to the second position;
FIG 7 is an enlarged diagram of a partial structure of the charging device of the electronic atomization system shown in FIG 6;
FIG 8 is a schematic structure diagram showing a charging seat of the charging device shown in FIG 6;
FIG 9 is a schematic structure diagram showing a first seat body of the charging seat shown in FIG 7;
FIG 10 is a schematic structure diagram showing a second seat body of the charging seat shown in FIG 7;
FIG 11 is a schematic structure diagram showing the rotating cover of the charging device shown in FIG 6;
FIG 12 is a schematic structure diagram showing a positioning seat of the charging device shown in FIG 6;
FIG 13 is a schematic structure diagram showing a positioning member of the charging device shown in FIG 6; and
FIG 14 is a schematic structure diagram showing the rotating structure of the charging device shown in FIG 6.

### EMBODIMENTS FOR IMPLEMENTING THE INVENTION

For better understanding of the technical features, purposes, and effects of the present invention, specific embodiments of the present invention will now be described in detail with reference to the accompanying drawings.

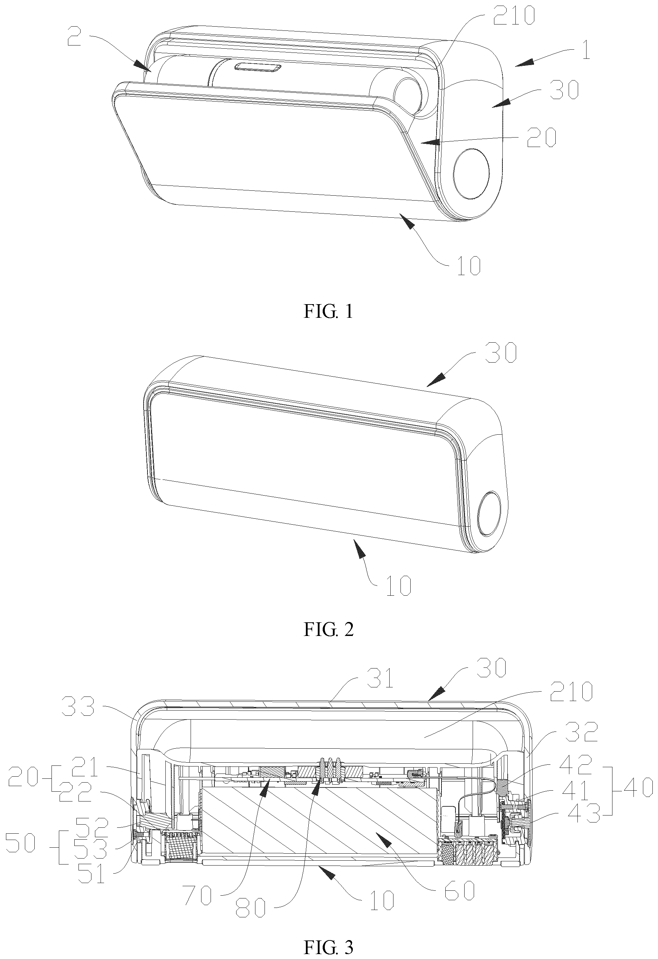

FIG 1 shows some preferred embodiments of an electronic atomization system according to the present invention. The electronic atomization system comprises a charging device 1 and an electronic atomization device 2. The charging device 1 is configured to electrically charge the electronic atomization device 2. The electronic atomization device 2 is receivable in the charging device 1 for arrangement. The electronic atomization device 2 is configured to heat an atomizable medium to generate an aerosol for vaping by a user.

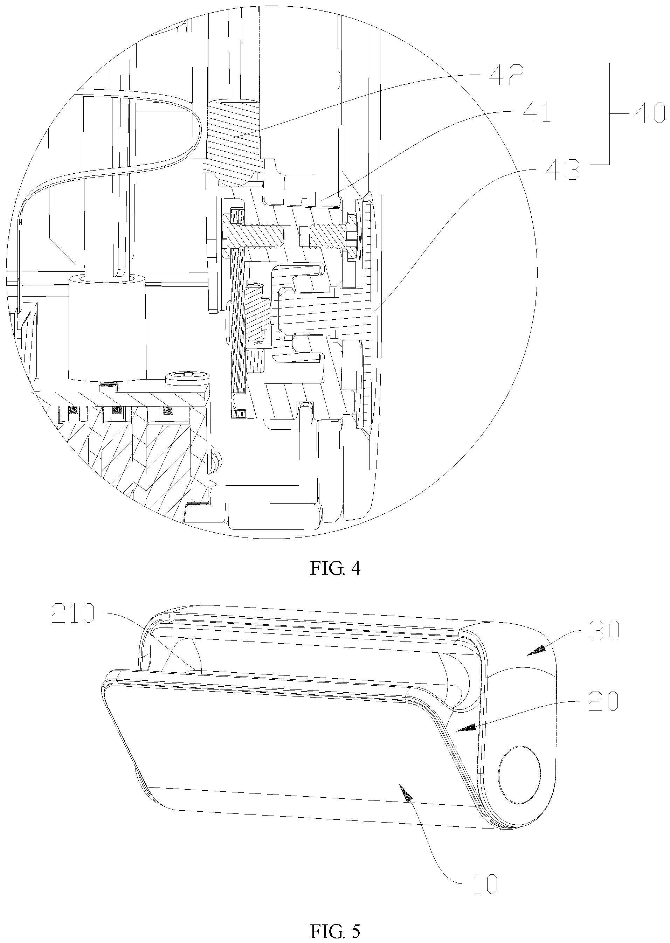

As shown in FIGS. 2-7, the charging device comprises an enclosure 10, a charging seat 20, and a rotating cover 30. The enclosure 10 encloses a periphery of the charging seat 20 to provide an effect of protection to the charging seat 20. In some embodiments, the enclosure 10 is omittable. The charging seat 20 is configured to accommodate the electronic atomization device 2, and to electrically charge the electronic atomization device 2. The rotating cover 30 is rotatably mounted on the charging seat 20 to provide protection to the electronic atomization device 2 located in the charging seat 20. When the rotating cover 30 rotates to a first position or a third position, the accommodating cavity 210 in the charging seat 20 is opened, and at this time, the electronic atomization device 2 can be placed into the accommodating cavity 210 for charging, or the electronic atomization device 2 is removable therefrom. When the rotating cover 30 rotates to a second position, the accommodating cavity 210 of the charging seat 20 is closed, so as to provide an effect of protection to the electronic atomization device 2 positioned in the accommodating cavity 210. In the above, the second position is located between the first position and the third position, and the first position and the third position are symmetrically set on two opposite sides of the second position. By symmetrically setting the first position and the third position, the rotation direction of the rotating cover 30 is not limited, and a user may make rotation in any direction to open the accommodating cavity 210, thereby easing the operation performed by the user.

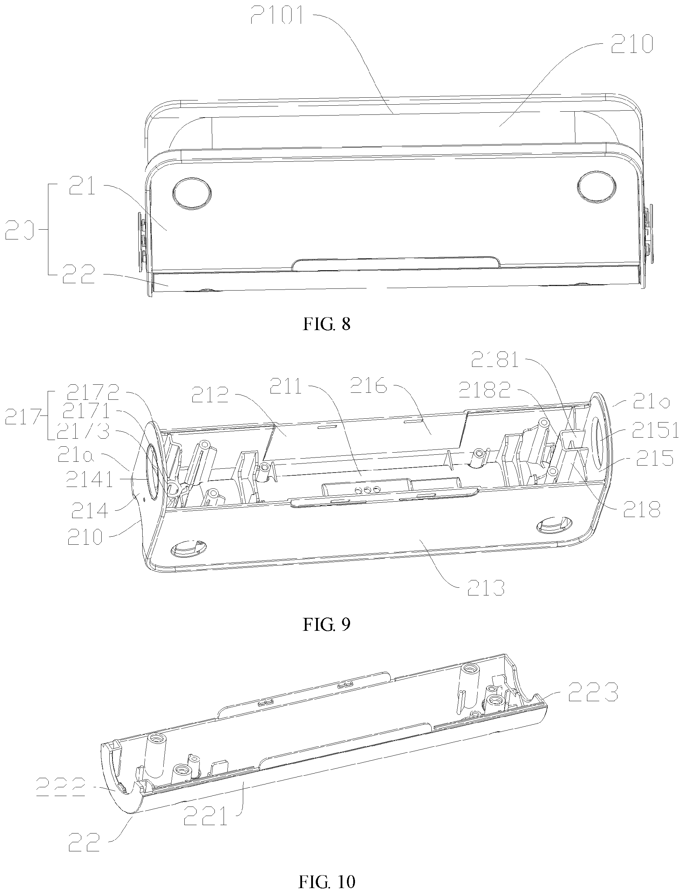

As shown in FIGS. 8-10, further, in some embodiments, the charging seat 20 comprises a first seat body 21 and a second seat body 22. The first seat body 21 and the second seat body 22 are detachably assembled with each other, and the first seat body 21 and the second seat body 22 cooperate with each other to form an enclosed receiving compartment 216 for accommodating components, such as a power supply structure 60 and a charging circuit board 70. In some embodiments, the first seat body 21 and the second seat body 22 are provided with a snap coupling structure to fulfill the detachable connection therebetween. Of course, it is appreciated that in some other embodiments, detachable connection between the first seat body 21 and the second seat body 22 is not limited to a snap coupling structure.

In some embodiments, the first seat body 21 comprises a bottom wall 211, a first side wall 212, a second side wall 213, a first end wall 214, and a second end wall 215. The first side wall 212 and the second side wall 213 are arranged on the bottom wall 211 in a manner of being parallel to and spaced from each other. The first end wall 214 and the second end wall 215 are arranged at two ends of the bottom wall 211 and are respectively connected to two ends of the first side wall 212 and the second side wall 213. In some embodiments, the charging seat 20 comprises a first end 21a and a second end 21b; the first end 21a and the second end 21b are arranged opposite to each other. The first end wall 214 and the second end wall 215 are respectively located at the first end 21a and the second end 21b of the charging seat 20. The first end wall 214 comprises a first mounting hole 2141, and the first mounting hole 2141 is configured to mount a positioning structure 40. The second end wall 215 comprises a second mounting hole 2151, and the second mounting hole 2151 is configured to mount a rotating structure 50. The bottom wall 211, the first side wall 212, the second side wall 213, the first end wall 214, and the second end wall 215 enclose and define the receiving compartment 216 that has an assembly opening. The receiving compartment 216 may receive components, such as the power supply structure 60 and the charging circuit board 70 therein. The second seat body 22 may cover the assembly opening, so as to enclose the receiving compartment 216. In some embodiments, the charging seat 20 comprises an accommodating cavity 210, and specifically, the accommodating cavity 210 is arranged on one side of the bottom wall 211 that is opposite to the receiving compartment 216. The accommodating cavity 210 is configured to accommodate the electronic atomization device. In some embodiments, the charging seat 20 comprises an opening 2101. The opening 2101 extends from the first end 21a toward the second end 21b and is in communication with the accommodating cavity 210. The opening 2101 is arranged opposite to the bottom wall 211 and is configured to receive disposition of the electronic atomization device into the accommodating cavity 210.

In some embodiments, the first seat body 21 further comprises a positioning assembly 217, and the positioning assembly 217 is configured to cooperate with the positioning structure 40 for positioning. In some embodiments, the positioning assembly 217 may comprise a positioning column 2171, a first positioning stop rib 2172, and a second positioning stop rib 2173; the first positioning stop rib 2172 and the second positioning stop rib 2173 are arranged on two opposite sides of the positioning column 2171 and are each extended to the first end wall 214.

In some embodiments, the first seat body 21 further comprises a mounting structure 218, which is configured to cooperate with a rotation axle of the rotating structure 50 for mounting. In some embodiments, the mounting structure 218 is of a rectangular cuboid configuration having one end connected to the bottom wall 211. The mounting structure 218 comprises a mounting trough 2181, and the mounting trough 2181 is arranged in an axial direction of the rotation axle 52 to receive the rotation axle of the rotating structure 50 to insert therein.

In some embodiments, the second seat body 22 may comprise a closure portion 221, a first barrier wall 222, and a second barrier wall 223. The closure portion 221 is of an arc configuration and may enclose the receiving compartment 216. The first barrier wall 222 and the second barrier wall 223 are arranged at two ends of the closure portion 221 and are of a semi-circular ring configuration. When the first seat body 21 and the second seat body 22 are assembled together, the first barrier wall 222 and the second barrier wall 223 fit with and contact the first end wall 214 and the second end wall 215.

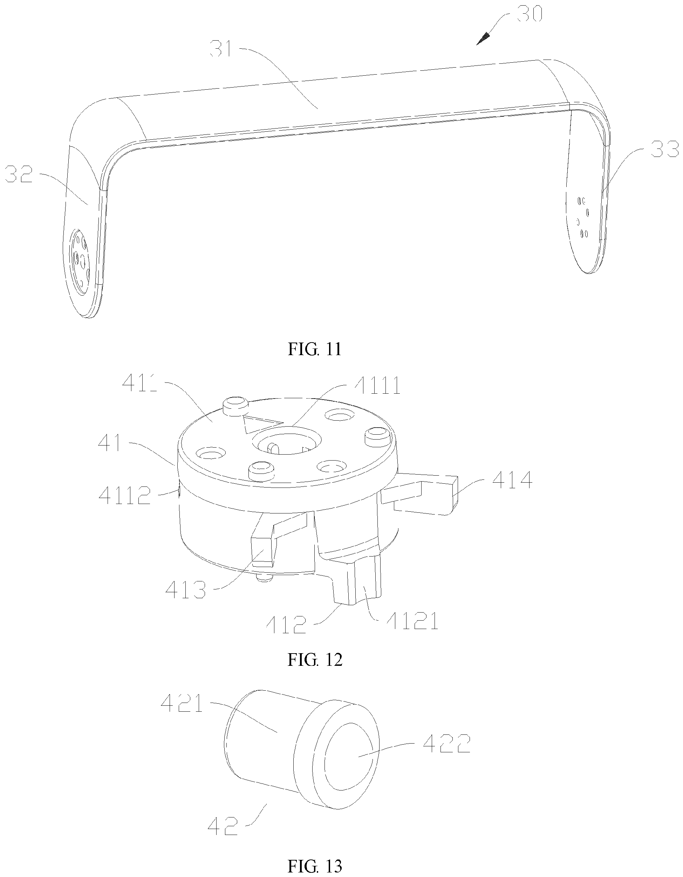

As shown in FIG 11, in some embodiments, the rotating cover 30 may rotate to cover the opening 2101, so as to cover and close the accommodating cavity 210. In some embodiments, the rotating cover 30 has a shape and size matching a shape and size of the opening. The rotating cover 30 comprises a covering portion 31, a first connecting portion 32, and the second connecting portion 33. In some embodiments, the covering portion 31 is of a rectangular shape, and the covering portion 31 may cover and close the opening 2101. The first connecting portion 32 and the second connecting portion 32 are respectively arranged at two ends of the covering portion 31. The first connecting portion 32 and the second connecting portion 33 are each arranged to curve with respect to the covering portion 31, and the first connecting portion 32 and the second connecting portion 33 may be integrally formed with the covering portion 31 to form one piece. In some embodiments, the first connecting portion 32 and the second connecting portion 33 are respectively and rotatably connected to the first end 21a and the second end 21b.

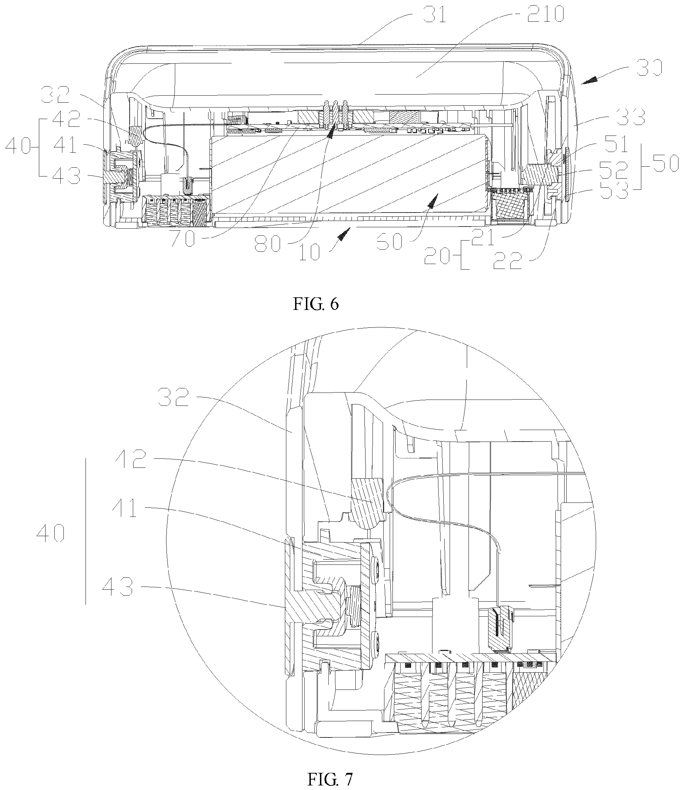

As shown in FIGS. 6 and 12-13, in some embodiments, the atomizer 1 further comprises a positioning structure 40; the positioning structure 40 is arranged in the charging seat 20 to position the rotating cover 30 so as to constrain an angle of rotation of the rotating cover 30 and to constrain the rotating cover 30 in position for rotation to the first position, the second position, and the third position, in order to prevent oscillating of the rotating cover 30.

In some embodiments, the positioning structure 40 comprises a positioning seat 41 and a positioning member 42. In some embodiments, the positioning seat 41 is partially arranged in the charging seat 20. In the instant embodiment, the positioning seat 41 is mounted in the first mounting hole 241 and partially located in the receiving compartment 216. Of course, it is appreciated that in some other embodiments, the positioning seat 41 may alternatively be completely located in the receiving compartment 216. The positioning seat 41 is connected with the rotating cover 30. The positioning member 42 is arranged is the charging seat 20 and engages with the positioning seat 41 is an elastic manner, so as to operate to hold the rotating cover 30 in position. When the rotating cover 30 rotates to the second position, the positioning member 42 cooperates with the positioning seat 41 to prevent oscillating of the rotating cover 30.

In some embodiments, the positioning seat 41 may comprises a seat body 411, and the seat body 411 is of a cylindrical shape and is driven by the rotating cover 30 to rotate. The seat body 411 is formed in the center with a connection through-hole 4111, and the connection through-hole 4111 is connected with a first fixing cap 43 to achieve connection with the first connecting portion 32 of the rotating cover 30. In some embodiments, the seat body 411 may be provided with a connecting assembly for connection with the first connecting portion 32, and optionally, the connecting assembly comprises a bolt. In some embodiments, an outer wall of the seat body 411 comprises a recessed channel 4112, which is in the form of an arc, and the recessed channel 4112 collaborate with the second end wall 222 of the second seat body 22 for mounting. The recessed channel 4112 is arranged to extend in a circumferential direction of the seat body 411.

In some embodiments, the positioning seat 41 further comprises a positioning tab 412. The positioning tab 412 is arranged to protrude out of the outer wall of the seat body 411 and is located in the receiving compartment 216. When the rotating cover 30 drives the seat body 411 to rotate, the positioning tab 412 rotates with the seat body 411. Specifically, it is arranged to correspond to the positioning column 2171. One side of the positioning tab 412 that faces the positioning column 2171 is provided with a positioning groove 4121, and the positioning groove 4121 is operable to cooperate with the positioning member 42. When the rotating cover 30 rotates to the second position, the covering portion 31 covers and closes the opening 2101, and the positioning member 42 partially fits into the positioning groove 4121 to thereby prevent oscillating of the rotating cover 30.

In some embodiments, the positioning seat 41 further comprises a first positioning rib 413 and a second positioning rib 414. The first positioning rib 413 and the second positioning rib 414 are arranged, at intervals, on the outer wall of the seat body 411 and are extended in radial directions of the seat body 411. When the rotating cover 30 drives the seat body 411 to rotate, the first positioning rib 413 and the second positioning rib 414 rotate with the seat body 411. The first positioning rib 413 and the second positioning rib 414 can be arranged on the same circumferential surface, and the positioning tab 412 is located in the middle between the first positioning rib 413 and the second positioning rib 414 and is set further from the first connecting portion 32 than the first positioning rib 413 and the second positioning rib 414. In some embodiments, the first positioning rib 413 and the second positioning rib 414 are arranged symmetric with each other. When the rotating cover 30 rotate to the first position, the first positioning rib 413 engages with the first positioning stop rib 2172 for positioning, and at this moment, the covering portion 321 shifts in a first direction to become staggered from the opening 2101, and the accommodating cavity 210 is set in an opened state. When the rotating cover 30 rotates to the third position, the second positioning rib 414 engages with the second positioning stop rib 2173 for positioning, and at this moment, the covering portion 321 shifts in a second direction to become staggered from the opening 2101, and the accommodating cavity 210 is set in an opened state. In this, the first direction and the second direction are opposite directions, such as leftward direction and rightward direction. Through the engagement between the first positioning rib 413 and the first positioning stop rib 2172, oscillating of the rotating cover 30 at the first position is prevented. Through the engagement between the second positioning rib 414 and the second positioning stop rib 2173 for positioning, oscillating of the rotating cover 30 at the second position is prevented. Through cooperation of the first positioning rib 413 and the second positioning rib 414 with each other, a maximum angle of rotation of the rotating cover 30 can be set and defined, making the rotating cover 30 rotating within the angular range so set. Optionally, in some embodiments, the maximum angle is 37 degrees, and of course, it is appreciated that in some other embodiments, the maximum angle is not limited to 37 degrees.

In some embodiments, the positioning member 42 is mounted in the positioning column 2171 in a reciprocally movable manner and is extendable out of one end of the positioning column 2171 to engage with the positioning groove 4121 for positioning. The positioning member 42 comprises a column-shaped body 421 and an elastic ball 422. The column-shaped body 421 penetrates into and is partially received in the positioning column 2171. The elastic ball 422 is arranged on one end of the column-shaped body 421. When the rotating cover 30 rotates to the second position, the elastic ball 422 gets into elastic contact engagement with an inner surface of the positioning groove 4121 so as to be easily disengageable from the positioning groove 4121. The inner surface of the positioning groove 4121 is an arc surface in order to match and mate the elastic ball 422.

In some embodiments, the positioning structure 40 further comprises an elastic element. The elastic element is located in the charging seat 20, and specifically, in some embodiments, the elastic element is arranged in the positioning column 2171 and has one end in contact engagement with the positioning member 42 so as to apply a spring force to the positioning member 42 to allow for easy rotation of the positioning seat 41. In some other embodiments, the elastic element may be mounted in the column-shaped body 421 of the positioning member 42 and in contact engagement with the elastic ball 422.

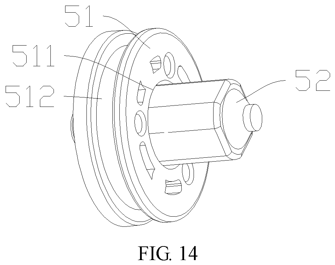

As shown in FIGS. 6 and 14, in some embodiments, the charging device 1 further comprises a rotating structure 50. The rotating structure 50 is arranged on the charging seat 20 and cooperates with the rotating cover 30 to allow for easy rotation of the rotating cover 30. In some embodiments, the rotating structure 50 comprises a fixing seat 51 and a rotation axle 52. The fixing seat 51 is mounted on the charging seat 20, and specifically, the fixing seat 51 is mounted in the second mounting hole 251. In some embodiments, the fixing seat 51 is of a column-shaped form. The fixing seat 51 comprises an insertion hole 511 in the center thereof, and the insertion hole 511 is arranged for receiving the rotation axle 52 to insert and fix therein. In some embodiments, an outer wall of the fixing seat 51 comprises an engagement groove 512, and the engagement groove 512 is arranged to extend in a circumferential direction of the fixing seat 51 to receive the second barrier wall 223 of the second seat body 22 to fit therein. In some embodiments, the fixing seat 51 may be provided with a connecting assembly to connect with and fix to the second connecting portion 33. The connecting assembly can be a bolt. In some embodiments, one side of the second connecting portion 33 that is opposite to the fixing seat 51 is provided with a second fixing cap 53, and the second fixing cap 53 presses the second connecting portion 33 and the fixing seat 51 to fix together. The rotation axle 52 is set between the first seat body 21 and the second seat body 22. Specifically, the rotation axle 52 is inserted into the mounting trough 2181 and is rotatable in the mounting trough 2181. As being connected with the fixing seat 51, the rotation axle 52 is connected with the rotating cover 30. The rotation axle 52 forms a gap with respect to the trough wall 2182 of the mounting trough 2181, so that when the rotation axle 52 is rotated with the rotating cover 30, sounding is generated.

In some embodiments, the atomizer 1 further comprises a power supply structure 60, a charging circuit board 70, and a charging connector 80. The power supply structure 60 and the charging circuit board 70 are arranged in the charging seat 20, and specifically, the power supply structure 60 and the charging circuit board 70 are accommodated in the receiving compartment 216, and the power supply structure 60 is connected with the charging circuit board 70. In some embodiments, the power supply structure 60 may be a battery. The charging connector 80 is mounted on a cavity wall of the accommodating cavity 210, and specifically, it is mounted on the bottom wall 211 and connected to the charging circuit board 70 to function for conductively connecting the electronic atomization device 2 to fulfill charging to the electronic atomization device 2.

It can be understood that the above-described embodiments only represent preferred ways of implementation of the present invention, and the description is made in a relatively specific and detailed manner, but this should not be construed as limiting to the scope of the claims of the present invention; it should be noted that for those having ordinary skill in the art, the above-described features can be arbitrarily combined and various transformations and improvements can be fulfilled without departing from the concept of the present invention, these all belonging to the scope of protection of the present invention; thus, all substitutes and modifications that are equivalent to the scope of the claims of the present invention shall fall within the scope of the claims of the present invention.

## Claims

1. A charging device, **characterized by** comprising a charging seat (20) and a rotating cover (30); the charging seat (20) comprising an accommodating cavity (210) for accommodating an electronic atomization device; the rotating cover (30) being rotatably mounted on the charging seat (20) and operable to cover the accommodating cavity (210);
wherein when the rotating cover (30) rotates to a first position, the accommodating cavity (210) is opened; and when the rotating cover (30) rotates to a second position, the accommodating cavity (210) is closed.

2. The charging device according to claim 1, **characterized in that** when the rotating cover (30) rotates to a third position, the accommodating cavity (210) is opened; and the second position is set between the first position and the third position.

3. The charging device according to claim 2, **characterized in that** the third position and the first position are symmetrically arranged on opposite sides of the second position.

4. The charging device according to claim 1, **characterized in that** the charging seat (20) comprises an opening (2101) in communication with the accommodating cavity (210);
the charging seat (20) comprises a first end (21a) and a second end (21b) opposite to the first end (21a); the opening (2101) extends from the first end (21a) toward the second end (21b);
the rotating cover (30) is rotatable to cover the opening (2101).

5. The charging device according to claim 4, **characterized in that** the rotating cover (30) comprises a covering portion (31) for covering the opening (2101) and a first connecting portion (32) and a second connecting portion (33) respectively arranged at two ends of the covering portion (31);
the first connecting portion (32) and the second connecting portion (33) are respectively and rotatably connected to the first end (21a) and the second end (21b).

6. The charging device according to claim 1, **characterized by** further comprising a positioning structure (40) which is arranged in the charging seat (20) for positioning the rotating cover (30).

7. The charging device according to claim 6, **characterized in that** the positioning structure (40) comprises a positioning seat (41) and a positioning member (42) which is elastic; the positioning seat (41) is at least partly arranged in the charging seat (20) and is connected to the rotating cover (30) to be driven to rotate by rotation of the rotating cover (30);
the positioning member (42) is arranged in the charging seat (20) and engageable with the positioning seat (41) for positioning.

8. The charging device according to claim 7, **characterized in that** the positioning seat (41) comprises a positioning tab (412) that is drivable by the rotating cover (30) to rotate, and the positioning tab (412) comprises a positioning groove (4121) engageable with the positioning member (42);
when the rotating cover (30) rotates to the second position, the positioning member (42) partly fits into the positioning groove (4121).

9. The charging device according to claim 8, **characterized in that** the positioning member (42) comprises a column-shaped body (421) and an elastic ball (422) arranged on one end of the column-shaped body (421);
the positioning groove (4121) has an inner surface that is of an arc shape for mating the elastic ball (422).

10. The charging device according to claim 7, **characterized in that** the positioning seat (41) further comprises a first positioning rib (413) that is drivable by the rotating cover (30) to rotate, and the charging seat (20) comprises a first positioning stop rib (2172);
when the rotating cover (30) rotates to the first position, the first positioning rib (413) engages with the first positioning stop rib (2172) for positioning.

11. The charging device according to claim 10, **characterized in that** the positioning seat (41) further comprises a second positioning rib (414) that is drivable by the rotating cover (30) to rotate, and the charging seat (20) comprises a second positioning stop rib (2173);
when the rotating cover (30) rotates to the third position, the second positioning rib (414) engages with the second positioning stop rib (2173) for positioning, and the accommodating cavity (210) is open.

12. The charging device according to claim 11, **characterized in that** the first positioning rib (413) and the second positioning rib (414) are arranged symmetric with each other and cooperate with each other to define a maximum angle of rotation of the rotating cover (30).

13. The charging device according to claim 7, **characterized in that** the positioning structure (40) further comprises an elastic element which is arranged in the charging seat (20) and abuts against the positioning member (42) to apply a spring force to the positioning member (42).

14. The charging device according to claim 1, **characterized by** further comprising a rotating structure (50) which is mounted on the charging seat (20) and operates in combination with the rotating cover (30).

15. The charging device according to claim 14, **characterized in that** the rotating structure (50) comprises a rotation axle (52);
the charging seat (20) comprises a first seat body (21) and a second seat body (22) cooperates with the first seat body (21), and the rotation axle (52) is mounted between the first seat body (21) and the second seat body (22) and connected to the rotating cover (30).

16. The charging device according to claim 15, **characterized in that** the first seat body (21) is provided with a mounting structure (218) for mounting the rotation axle (52);
the mounting structure (218) comprises a mounting trough (2181), the mounting trough (2181) being arranged in an axial direction of the rotation axle (52) to receive the rotation axle (52) to insert therein;
the rotation axle (52) forms a gap with respect to a trough wall (2182) of the mounting trough (2181) in an axial direction.

17. The charging device according to claim 15, **characterized in that** the rotating structure (50) comprises a fixing seat (51) mounted on the charging seat (20), the fixing seat (51) being connected to the rotating cover (30), the rotation axle (52) being connected and fixed to the fixing seat (51).

18. The charging device according to claim 1, **characterized by** further comprising a power supply structure (60) arranged in the charging seat (20) and a charging circuit board (70) connected to the power supply structure (60).

19. The charging device according to claim 1, **characterized by** further comprising a charging connector (80), the charging connector (80) being arranged on a cavity wall of the accommodating cavity (210).

20. An electronic atomization system, **characterized by** comprising the charging device (1) according to any one of claims 1-19, and an electronic atomization device (2); wherein the electronic atomization device (2) is receivable in the accommodating cavity (210) of the charging device (1) for charging.
